# EUROPEAN PATENT APPLICATION

(11) **EP 3 778 680 A1**
(43) Date of publication of application: **17.02.2021**
(21) Application number: 19777360.9
(22) Date of filing: 07.03.2019
(51) Int. Cl.: C08F 283/01, C08F 4/32, C08F 18/16

(54) **THERMOSETTING RESIN COMPOSITION**

(30) Priority: 28.03.2018 JP 2018061215
(71) Applicant: Osaka Soda Co., Ltd., Osaka-shi, Osaka 550-0011 (JP)
(72) Inventor: NAGAI, Yosuke, Osaka-shi, Osaka 550-0011 (JP); INOUE Satoshi, Osaka-shi, Osaka 550-0011 (JP)
(74) Representative: Vossius & Partner Patentanwälte Rechtsanwälte mbB
(86) International application number: PCT/JP2019/009098
(87) International publication number: WO 2019/188089

(57) **Abstract**

The present invention aims to provide a thermosetting resin composition that causes no environmental issues such as generation of VOCs and has curability (especially, curability at low temperature) as good as that in the case using a diallyl phthalate monomer as a crosslinking agent. The present invention reveals that the following thermosetting resin composition has excellent curability at low temperature. The thermosetting resin composition contains an unsaturated polyester resin; an alicyclic polyfunctional allyl ester represented by the following formula (1) [in the formula, n is an integer of 2 to 4 and Z is an n-valent alicyclic hydrocarbon group]; and an initiator having a one-minute half-life temperature in a range of 100°C to 250°C and a molecular weight of 100 to 400 and selected from the group consisting of peroxyketals, peroxyesters, dialkyl peroxides, and peroxy carbonates.
[Chem. 1]

**Z(̵COOCH₂ CH=CH₂)ₙ ···** **(1)**

## Description

### TECHNICAL FIELD

The present invention relates to thermosetting resin compositions.

### BACKGROUND ART

Sealing resins are recently used for electronic components such as capacitors, coils, and resistors in order to improve reliability and productivity. Sealing resins are required to have various characteristics according to the shape and size of the target electronic component, such as physical characteristics including moisture resistance, low-stress properties, high thermal conductivity, and impact resistance. Examples of the resin satisfying these characteristics include thermosetting resins such as diallyl phthalate resins and unsaturated polyester resins.

Known resin compositions such as unsaturated polyester resin compositions and vinyl ester resin compositions typically contain styrene as a crosslinking agent because of its excellent reactivity (see Patent Literature 1). Unfortunately, use of styrene may cause environmental issues such as marine contamination and generation of volatile organic compounds (VOCs) and may also cause insufficient storage stability. Accordingly, development of a styrene-free resin composition has been awaited.

Patent Literature 2 discloses that use of a specific peroxy carbonate as an initiator allows an insulating resin composition containing an unsaturated polyester resin and a diallyl phthalate monomer to be cured at relatively low temperature (80°C to 130°C). Unfortunately, use of the diallyl phthalate monomer needs to be avoided in some applications because it is derived from phthalate. Accordingly, development of a resin composition has been desired which has broader versatility and curability (especially, curability at low temperature) as good as that in the case using a diallyl phthalate monomer.

### CITATION LIST

### - Patent Literature

Patent Literature 1: JP 2981330 B
Patent Literature 2: JP 2010-209142 A

### SUMMARY OF INVENTION

### - Technical Problem

The present invention aims to provide a thermosetting resin composition that causes no environmental issues such as generation of VOCs and has curability (especially, curability at low temperature) as good as that in the case using a diallyl phthalate monomer as a crosslinking agent.

### - Solution to Problem

The present inventors found through intensive studies that use of the following thermosetting resin composition can provide a resin composition having excellent curability (especially, curability at low temperature), and thereby completed the present invention. The thermosetting resin composition contains:
an unsaturated polyester resin;
an alicyclic polyfunctional allyl ester represented by the following formula (1):
[Chem. 1]

**Z(̵COOCH₂ CH=CH₂)ₙ ···** **(1)**

wherein n is an integer of 2 to 4 and Z is an n-valent alicyclic hydrocarbon group; and
an initiator having a one-minute half-life temperature in a range of 100°C to 250°C and a molecular weight of 100 to 400 and selected from the group consisting of peroxyketals, peroxyesters, dialkyl peroxides, and peroxy carbonates.

Item 1. A thermosetting resin composition containing:
   an unsaturated polyester resin;
   an alicyclic polyfunctional allyl ester represented by the following formula (1):

   [Chem. 2]

   **Z(̵COOCH₂ CH=CH₂)ₙ ···** **(1)**

   wherein n is an integer of 2 to 4 and Z is an n-valent alicyclic hydrocarbon group; and
   an initiator having a one-minute half-life temperature in a range of 100°C to 250°C and a molecular weight of 100 to 400 and selected from the group consisting of peroxyketals, peroxyesters, dialkyl peroxides, and peroxy carbonates.
Item 2. A cured product obtainable by thermally curing the thermosetting resin composition according to item 1.
Item 3. A molded article obtainable by molding the thermosetting resin composition according to item 1.

### - Advantageous Effects of Invention

The thermosetting resin composition of the present invention contains a crosslinking agent that is an alicyclic polyfunctional allyl ester represented by the formula (1) and an initiator that has a one-minute half-life temperature in the range of 100°C to 250°C and a molecular weight of 100 to 400 and is one selected from the group consisting of peroxyketals, peroxyesters, dialkyl peroxides, and peroxy carbonates. Such a thermosetting resin composition can achieve a highest attainment temperature and curing time that are comparable to those in the case using a diallyl phthalate monomer and also achieve excellent curability (especially, curability at low temperature). Moreover, a cured product obtainable by thermally curing the thermosetting resin composition of the present invention and a molded article obtainable by molding the thermosetting resin composition of the present invention are excellent in mechanical strength such as impact resistance (impact strength, bending strength, deflection temperature under load) and volume resistivity.

### DESCRIPTION OF EMBODIMENTS

The thermosetting resin composition is specifically described hereinbelow.

### Thermosetting resin composition

The thermosetting resin composition of the present invention contains
an unsaturated polyester resin;
an alicyclic polyfunctional allyl ester represented by the following formula (1):
[Chem. 3]

**Z(̵COOCH₂ CH=CH₂)ₙ ···** **(1)**

wherein n is an integer of 2 to 4 and Z is an n-valent alicyclic hydrocarbon group; and
an initiator having a one-minute half-life temperature in a range of 100°C to 250°C and a molecular weight of 100 to 400 and selected from the group consisting of peroxyketals, peroxyesters, dialkyl peroxides, and peroxy carbonates.

### Unsaturated polyester resin

The unsaturated polyester resin used in the present invention is not limited and may be a known one in the technical field. A typical unsaturated polyester resin is a compound obtained through polycondensation (esterification) of a polyol with a polybasic acid (an unsaturated polybasic acid or a saturated polybasic acid). An appropriate unsaturated polyester resin may be selected according to the desired characteristics.

The weight average molecular weight (Mw) of the unsaturated polyester resin in the present invention is not limited and may be, for example, 3,000 to 50,000. The "weight average molecular weight" herein means the value measured at room temperature (25°C) by gel permeation chromatography (Shodex GPC-101 available from Showa Denko K.K.) and determined by a standard polystyrene calibration curve.

The polyol used for synthesis of the unsaturated polyester resin inof the present invention is not limited and may be a known one. Examples of the polyol include ethylene glycol, propylene glycol, neopentyl glycol, butanediol, diethylene glycol, dipropylene glycol, triethylene glycol, pentane diol, hexane diol, hydrogenated bisphenol A, bisphenol A, and glycerol. One of these polyols may be used alone or two or more thereof may be used in combination. In order to achieve heat resistance, mechanical strength, and moldability, preferred among these are propylene glycol, neopentyl glycol, bisphenol A, and hydrogenated bisphenol A.

The unsaturated polybasic acid used for synthesis of the unsaturated polyester resin in the present invention is not limited and may be a known one. Examples of the unsaturated polybasic acid include maleic anhydride, fumaric acid, citraconic acid, and itaconic acid. One of these may be used alone or two or more thereof may be used in combination.

The saturated polybasic acid used for synthesis of the unsaturated polyester resin is not limited and may be a known one. Examples of the saturated polybasic acid include phthalic anhydride, isophthalic acid, terephthalic acid, het acid, succinic acid, adipic acid, sebacic acid, tetrachlorophthalic anhydride, tetrabromophthalic anhydride, and endomethylene tetrahydrophthalic anhydride. One of these may be used alone or two or more thereof may be used in combination.

In order to achieve properties such as heat resistance, mechanical strength, and moldability, preferred among these polybasic acids is an unsaturated polybasic acid, and more preferred are maleic anhydride and fumaric acid. In order to more successfully achieve the effects of the present invention, preferred is a saturated polybasic acid, more preferred are phthalic anhydride, isophthalic acid, terephthalic acid, tetrachlorophthalic anhydride, tetrabromophthalic anhydride, and endomethylene tetrahydrophthalic anhydride, still more preferred are phthalic anhydride, isophthalic acid, and terephthalic acid, and particularly preferred is isophthalic acid.

The unsaturated polyester resin is not limited. One unsaturated polyester resin may be used alone or two or more thereof may be used in combination. In order to more successfully achieve the effects of the present invention, preferred is a saturated polybasic acid-based unsaturated polyester resin containing a saturated polybasic acid as a polybasic acid for synthesis of an unsaturated polyester resin, and more preferred is an isophthalic acid-based unsaturated polyester resin containing isophthalic acid as a polybasic acid for synthesis of an unsaturated polyester resin.

The unsaturated polyester resin in the present invention can be synthesized by a known method from raw materials as mentioned above. Conditions for the synthesis need to be appropriately set according to the raw materials used and the amounts thereof. Usually, the synthesis may be performed by esterification in a current of inert gas such as nitrogen at a temperature of 140°C to 230°C under increased or reduced pressure. The esterification reaction may be performed in the presence of an esterification catalyst according to need. Examples of the catalyst include known catalysts such as manganese acetate, dibutyl tinoxide, stannous oxalate, zinc acetate, and cobalt acetate. One of these may be used alone or two or more thereof may be used in combination.

The amount of the unsaturated polyester resin used in the present invention is not limited, and is preferably in the range of 10 to 98% by weight, more preferably in the range of 15 to 95% by weight, still more preferably in the range of 20 to 90% by weight, particularly preferably in the range of 30 to 80% by weight, most preferably in the range of 40 to 70% by weight, of the whole amount of the thermosetting resin composition. The unsaturated polyester resin within the above ranges can sufficiently achieve the effects of the present invention.

### Alicyclic polyfunctional allyl ester (crosslinking agent)

The thermosetting resin composition of the present invention contains an alicyclic polyfunctional allyl ester represented by the formula (1).

[Chem. 4]

**Z(̵COOCH₂ CH=CH₂)ₙ ···** **(1)**

[In the formula, n is an integer of 2 to 4 and Z is an n-valent alicyclic hydrocarbon group.]

In the formula (1), the n-valent alicyclic hydrocarbon group preferably has a carbon number of 3 to 18, more preferably 4 to 12, still more preferably 4 to 10. Particularly preferably, all the carbon atoms constituting the alicyclic hydrocarbon group form a ring structure. In other words, the n-valent alicyclic hydrocarbon group is preferably a 3- to 18-membered ring, more preferably a 4-to 12-membered ring, still more preferably a 4- to 10-membered ring.

The n-valent alicyclic hydrocarbon group may be a saturated n-valent alicyclic hydrocarbon group or may partly include an unsaturated bond. Particularly preferably, the n-valent alicyclic hydrocarbon group is a saturated n-valent alicyclic hydrocarbon group. The term "alicyclic" herein means that a non-aromatic cyclic structure is included, and the term "alicyclic hydrocarbon group" herein means a hydrocarbon group having a non-aromatic cyclic structure.

Examples of the alicyclic polyfunctional allyl ester represented by the formula (1) include compounds represented by the formulas (2) to (9), including diallyl cyclobutanedicarboxylate, diallyl cyclobutenedicarboxylate, diallyl cyclohexanedicarboxylate (diallyl hexahydrophthalate), and diallyl tetrahydrophthalate. Preferred among these are diallyl cyclohexanedicarboxylate (diallyl hexahydrophthalate) and diallyl tetrahydrophthalate, and more preferred is diallyl cyclohexanedicarboxylate.

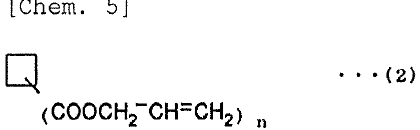

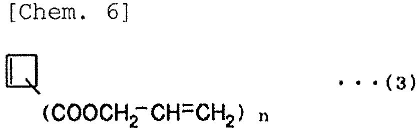

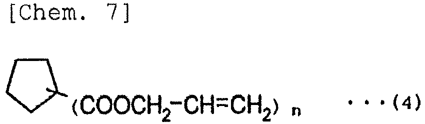

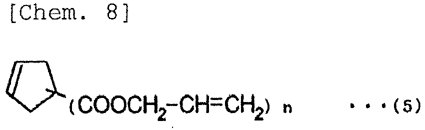

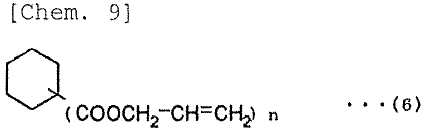

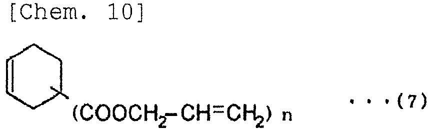

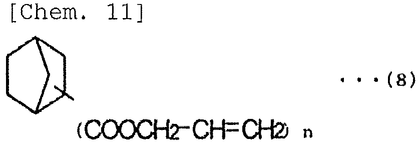

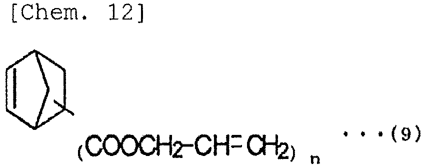

Each n in the formulas (2) to (9) is the same as n in the formula (1).

In the formulas (2) to (9), crosslinking may be performed in the ring structure. Examples of the compound having crosslinking in the ring structure include adamantane and norbornane.

The COOCH₂-CH=CH₂ groups on each ring in the formulas (2) to (9) may be substituted in any positional combination. The compound may be a mixture of compounds that differ in the combination of substitution positions. When two COOCH₂-CH=CH₂ groups bind to a 6-membered ring, the two COOCH₂-CH=CH₂ groups may be present at any of an ortho position, meta position, and para position, preferably at an ortho position or para position.

Examples of the alicyclic polyfunctional allyl ester include diallyl cyclobutanedicarboxylate, diallyl cycloheptanedicarboxylate, diallyl cyclohexanedicarboxylate (diallyl hexahydrophthalate), diallyl norbornanedicarboxylate, diallyl cyclobutenedicarboxylate, diallyl cycloheptenedicarboxylate, diallyl cyclohexenedicarboxylate (diallyl tetrahydrophthalate), and diallyl norbornenedicarboxylate.

Preferred among these are diallyl 1,2-cyclohexanedicarboxylate, diallyl 4-cyclohexene-1,2-dicarboxylate, and diallyl 1,4-cyclohexanedicarboxylate, and more preferred is diallyl 1,2-cyclohexanedicarboxylate.

The alicyclic polyfunctional allyl ester represented by the formula (1) and used in the present invention can be produced by reacting a carboxylic acid compound represented by the formula (10) or an acid anhydride thereof with a halogenated allyl or an allyl alcohol in the presence of, for example, an acid substance, a basic substance, a catalyst, or a solvent. The carboxylic acid compound represented by the formula (10) is available as a reagent or an industrial chemical product.

Z-(COOH)n ··· (10)

[In the formula, n and Z are the same as n and Z in the formula (1).]

Examples of the carboxylic acid compound represented by the formula (10) include 1,2-cyclohexane dicarboxylic acid, 1,3-cyclohexane dicarboxylic acid, 1,4-cyclohexane dicarboxylic acid, 4-cyclohexene-1,2-dicarboxylic acid, and 2-cyclohexene-1,2-dicarboxylic acid. One of these may be used alone or two or more thereof may be used in combination.

Examples of the halogenated allyl include allyl chloride, allyl bromide, and allyl iodide. One of these may be used alone or two or more thereof may be used in combination. The halogenated allyl may be used in any amount and is usually preferably used in the range of 2 to 20 mole equivalents relative to the carboxylic acid compound represented by the formula (10). In terms of the reaction speed and volumetric efficiency, the amount thereof is more preferably 2.3 to 10 mole equivalents. These halogenated allyls are available as reagents or industrial chemical products.

The allyl alcohol is available as a reagent or an industrial chemical product. The amount of the allyl alcohol is not limited, and is usually preferably in the range of 2 to 10 mole equivalents, more preferably in the range of 2 to 5 mole equivalents, relative to the carboxylic acid compound represented by the formula (10).

Examples of the acid substance include p-toluene sulfonic acid, dodecyl benzene sulfonic acid, and sulfuric acid. One of these may be used alone or two or more thereof may be used in combination. The acid substance is preferably used in the range of 0.001 to 0.1 mole equivalents, more preferably in the range of 0.005 to 0.05 mole equivalents, relative to the carboxylic acid compound represented by the formula (10).

Typical examples of the basic substance include hydroxides of an alkali metal such as sodium hydroxide and potassium hydroxide; hydrides of an alkali metal such as hydrogenated sodium and hydrogenated potassium; carbon oxides such as sodium carbonate and potassium carbonate; hydrogencarbonates such as sodium hydrogencarbonate and potassium hydrogencarbonate, and alcoholate. Also, organic bases such as a quaternary ammonium compound, an aliphatic amine, and an aromatic amine may be used. One of these may be used alone or two or more thereof may be used in combination. The basic substance is preferably used in the range of 0.5 to 30 mole equivalents, more preferably 2 to 15 mole equivalents, relative to the carboxylic acid compound represented by the formula (10).

Examples of the catalyst include transition metals such as copper, iron, cobalt, nickel, chromium, and vanadium and transition metal salts. Preferred among these is a copper compound.

The copper compound is not limited and almost all copper compounds are usable. Preferred are cuprous chloride, cuprous bromide, cuprous oxide, cuprous iodide, cuprous cyanide, cuprous sulfate, cupric sulfate, cupric chloride, cupric hydroxide, cupric bromide, cupric phosphate, cuprous nitrate, cupric nitrate, copper carbonate, cuprous acetate, and cupric acetate. Particularly preferred among these are cuprous chloride, cupric chloride, cuprous bromide, cupric bromide, cuprous iodide, cuprous sulfate, cupric sulfate, and cupric acetate because they are easily available and inexpensive. One of these may be used alone or two or more thereof may be used in combination.

The reaction can be performed in the presence or absence of a solvent. The solvent may be any solvent that does not adversely affect the reaction. Examples thereof include aromatic hydrocarbons such as benzene, toluene, and xylene; saturated aliphatic hydrocarbons such as hexane, heptane, octane, cyclohexane, and methyl cyclohexane; ethers such as diethyl ether, diethylene glycol dimethyl ether, 1,4-dioxane, and tetrahydrofuran; esters such as ethyl acetate and butyl acetate; halogenated hydrocarbons such as methylene chloride, chloroform, and carbon tetrachloride, and dimethyl formamide, N-methylpyrrolidone, and sulfolane. One of these may be used alone or two or more thereof may be used in combination. In the case of using a solvent, the amount of the solvent is not limited, and is usually preferably used in the range of 0.01 to 20 times by weight, more preferably in the range of 0.1 to 10 times by weight, relative to the carboxylic acid compound represented by the formula (10). Still, this reaction can efficiently provide an alicyclic polyfunctional allyl ester even without a solvent.

In particular, in the case of using a basic substance as an aqueous solution for the reaction, a phase-transfer catalyst is preferably used in order to promote the reaction. The phase-transfer catalyst is not limited, and examples thereof include quaternary ammonium salts such as trioctylmethyl ammonium chloride, tetrabutyl ammonium chloride, and tetrabutyl ammonium bromide; phosphonium salts such as tetrabutyl phosphoniumchloride; and crown ethers such as 15-crown-5 and 18-crown-6. One of these may be used alone or two or more thereof may be used in combination. In the case of using a phase-transfer catalyst, the amount thereof is usually preferably in the range of 0.001 to 1 mole equivalents, more preferably 0.01 to 0.4 mole equivalents, relative to the carboxylic acid compound represented by the formula (10).

In order to achieve a sufficient reaction speed and a high yield with effectively suppressed side reaction, the reaction temperature is usually preferably in the range of -30°C to 150°C, more preferably -10°C to 120°C. The reaction time is preferably in the range of 10 minutes to 15 hours. In order to suppress the side reaction, the reaction time is preferably in the range of 10 minutes to 10 hours.

The reaction is preferably performed in an atmosphere containing inert gas such as nitrogen or argon. The reaction may be performed under atmospheric or increased pressure. In terms of production equipment, the reaction is preferably performed under atmospheric pressure. The reaction can be performed by, for example, charging a stirred reactor with raw materials at once or in portions, and reacting the materials at the above reaction temperature for a predetermined time.

Completion of the reaction is followed by neutralization of the reaction liquid mixture, optionally washing with water, saturated brine, or the like, condensation, and typical purification operation for purifying organic compounds, such as distillation or column chromatography, whereby an alicyclic polyfunctional allyl ester is obtained with high purity.

In the thermosetting resin composition of the present invention, the alicyclic polyfunctional allyl ester is preferably present in an amount of 5 parts by weight or more, more preferably 10 parts by weight or more, still more preferably 15 parts by weight or more, further more preferably 30 parts by weight or more, particularly preferably 60 parts by weight or more, most preferably 80 parts by weight or more, while preferably 200 parts by weight or less, more preferably 180 parts by weight or less, still more preferably 150 parts by weight or less, further more preferably 120 parts by weight or less, relative to 100 parts by weight of the unsaturated polyester resin.

### Initiator

The thermosetting resin composition of the present invention contains an initiator selected from the group consisting of peroxyketals, peroxyesters, dialkyl peroxides, and peroxy carbonates. One of these initiators may be used alone or two or more thereof may be used in combination.

The initiator usable in the present invention has a one-minute half-life temperature of 100°C or higher, preferably 125°C or higher, more preferably 140°C or higher. The one-minute half-life temperature is 250°C or lower, preferably 200°C or lower, more preferably 180°C or lower. The initiator has a molecular weight of 100 or more, preferably 150 or more. The molecular weight is 400 or less, preferably 350 or less. The term "one-minute half-life temperature" herein means the temperature at which the concentration of a peroxide is halved from the initial value in one minute.

Specifically, the one-minute half-life temperature can be determined as follows. A peroxide is pyrolyzed at a constant temperature (T). Then, the relation between time (t) and lna/(a-x) is plotted as a straight line, where a represents the initial concentration of the peroxide and x represents the amount of decomposed peroxide. The slope constant k of the straight line is then determined. The determined k is assigned to the definition formula: k(t1/2) = ln2, whereby the half-life value at a temperature (T) can be determined. This procedure is repeated and the half-life values (t1/2) at different temperatures are determined. The obtained ln(t1/2) values and 1/T values are plotted.

The obtained straight line is extrapolated. From the plotted figure, the temperature at which the half-life value (t1/2) is one minute, i.e., one-minute half-life temperature, can be determined.

The percentage of hydrogen abstraction of the initiator is not limited, and is preferably 3% or more, more preferably 5% or more, still more preferably 7% or more, while preferably 70% or less, more preferably 50% or less, still more preferably 20% or less. The term "percentage of hydrogen abstraction" herein means the value determined from the amount of a cyclohexane-MSD adduct that is generated when a cyclohexane and an α-methyl styrene dimer are reacted in the presence of an initiator. The value is measured by a measuring method disclosed in Polymer Journal, Vol. 29, No.4, pp. 366 to pp. 369.

The following are examples of the initiator in the present invention. The parenthesized temperatures represent one-minute half-life temperatures.

Specific examples of the dialkyl peroxides include dicumyl peroxide (175.2°C), 2,5-dimethyl-2,5-bis(tert-butyl peroxy)hexane (179°C), tert-butyl cumyl peroxide (173.3°C), di-tert-butyl peroxide (193°C), and 2,5-dimethyl-2,5-bis(tert-butyl peroxy)hexine3 (193°C).

Specific examples of the peroxyketals include 1,1-bis(tert-hexylperoxy)-3,3,5-trimethyl cyclohexane (147°C), 1,1-bis(tert-butyl peroxy)-2-methyl cyclohexane (142.1°C), 1,1-bis(tert-butyl peroxy)cyclohexane (153.8°C), 2,2-bis(tert-butyl peroxy)butane (159.9°C), 1,1-di(tert-hexylperoxy)cyclohexane (149.2°C), and n-butyl-4,4-bis(tert-butyl peroxy)valerate (172.5°C).

Specific examples of the peroxyesters include tert-butyl peroxyneodecanoate (103.5°C), tert-hexyl peroxyneodecanoate (100.9°C), tert-butyl peroxyneoheptanoate (104.6°C), tert-hexyl peroxypivalate (109.1°C), tert-butyl peroxypivalate (110.3°C), 1,1,3,3-tetramethylbutyl peroxy-2-ethylhexanoate (124.3°C), tert-amyl peroxy-2-ethylhexanoate (121°C), tert-butyl peroxy-2-ethylhexanoate (134°C), tert-butyl peroxyisobutyrate (136.1°C), tert-butyl peroxy-3,5,5-trimethylhexanoate (166.0°C), tert-butyl peroxyacetate (159.9°C), tert-butyl peroxybenzoate (166.8°C), tert-hexylperoxyisopropyl monocarbonate (155.0°C), tert-butyl peroxylaurate (159.4°C), tert-butylperoxyisopropyl monocarbonate (158.8°C), tert-butyl peroxy-2-ethylhexyl monocarbonate (161.4°C), 2,5-dimethyl-2,5-di-benzoyl peroxyhexane (162°C), and tert-hexyl peroxybenzoate (160.3°C).

Specific examples of the peroxy carbonates include tert-amyl peroxy isopropyl carbonate (114°C), tert-butyl peroxy isopropyl carbonate (156°C), tert-butyl peroxy-2-ethylhexyl carbonate (156°C), and tert-butyl peroxy-2-ethylhexyl-monocarbonate (161.4°C).

In order to achieve excellent curability (especially, curability at low temperature), preferred among these initiators are peroxyketals and peroxyesters, and more preferred are peroxyketals.

In order to achieve excellent curability (especially, curability at low temperature), preferred specific compounds are dicumyl peroxide, tert-butyl cumyl peroxide, 1,1-di(tert-hexylperoxy)cyclohexane, n-butyl-4,4-bis(tert-butyl peroxy)valerate, tert-butyl peroxy benzoate, tert-hexyl peroxy benzoate, and tert-butyl peroxy-2-ethylhexyl-monocarbonate, more preferred are 1,1-di(tert-hexylperoxy)cyclohexane and n-butyl-4,4-bis(tert-butylperoxy)valerate, and still more preferred is 1,1-di(tert-hexylperoxy)cyclohexane.

The thermosetting resin composition of the present invention preferably contains the specific initiator in an amount of 0.01 parts by weight or more, more preferably 0.05 parts by weight or more, still more preferably 0.1 parts by weight or more, further more preferably 0.5 parts by weight or more, while preferably 10 parts by weight or less, more preferably 8 parts by weight or less, still more preferably 5 parts by weight or less, further more preferably 3 parts by weight or less, relative to 100 parts by weight of the sum of the unsaturated polyester resin and the alicyclic polyfunctional allyl ester.

The thermosetting resin composition of the present invention contains the specific initiator in an amount of preferably 50% by weight or more, more preferably 80% by weight or more, still more preferably 90% by weight or more, particularly preferably 98% by weight or more, most preferably 99.5% by weight or more, of 100% by weight of the initiator. The amount of the specific initiator may be 100% by mass.

The thermosetting resin composition of the present invention may contain, in addition to the specific initiator, a different initiator other than the specific initiator. Examples of the different initiator include ketone peroxides such as methyl ethyl ketone peroxide (171°C) and cyclohexanone peroxide (174°C); hydroperoxides such as 1,1,3,3-tetramethyl butyl hydroperoxide (246.6°C), p-methane hydroperoxide (199.5°C), and diisopropyl benzene hydroperoxide (232.5°C); and diacyl peroxides such as dilauroyl peroxide (116.4°C) and benzoyl peroxide (130°C). One of these initiators may be used alone or two or more thereof may be used in combination.

### Inorganic filler

The thermosetting resin composition of the present invention may contain an inorganic filler according to need. Examples of the inorganic filler include hydrates of metals, such as molten silica, crystalline silica, alumina, quartz glass, calcium carbonate, aluminum hydroxide, and calcium sulfate, and glass power, talc, and mica. The inorganic filler has a particle size of 0.1 to 100 µm, preferably 0.5 to 60 µm. The inorganic filler having too small a particle size increases the viscosity of the composition, and thus the composition is insufficiently impregnated into reinforcement fibers. Thereby, the material tends to take in air, resulting in a molded article with pores. The inorganic filler having too large a particle size reduces the specific surface area of particles, resulting in reduced fluidity.

The inorganic filler in the present invention may be added in an amount of 10 to 1000 parts by weight, preferably 200 to 800 parts by weight, relative to 100 parts by weight of the unsaturated polyester resin. The inorganic filler in too small an amount deteriorates the handleability of the material before molding. The inorganic filler in too large an amount significantly increases the viscosity to reduce the fluidity during molding, and reduces the impregnating ability to reinforcement fibers. Thereby, the material tends to take in air, resulting in a molded article with pores.

The thermosetting resin composition of the present invention may contain, in addition to the above components, known components in the technical field, such as a fibrous reinforcing agent, a low shrinkage agent, a release agent, a thickener, a pigment, and a viscosity reducer within the range that does not impair the effects of the present invention.

The fibrous reinforcing agent used in the present invention is not limited and may be a product known in the technical field. Examples of the fibrous reinforcing agent include various organic fibers and inorganic fibers, such as glass fiber, pulp fiber, tetron(®) fiber, vinylon fiber, carbon fiber, aramid fiber, and wollastonite. Preferred among these is chopped strand glass having a fiber length of about 1.5 to 25 mm. One of these may be used alone or two or more thereof may be used in combination.

Examples of the low shrinkage agent used in the present invention include thermoplastic polymers typically used as low shrinkage agents, such as polystyrene, polymethyl methacrylate, polyvinyl acetate, saturated polyester, and styrene-butadiene-based rubber. One of these may be used alone or two or more thereof may be used in combination.

Examples of the release agent used in the present invention include stearic acid, zinc stearate, calcium stearate, aluminum stearate, magnesium stearate, and carnauba wax. One of these may be used alone or two or more thereof may be used in combination.

Examples of the thickener used in the present invention include metal oxides such as magnesium oxide, magnesium hydroxide, calcium hydroxide, and calcium oxide and isocyanate compounds. One of these may be used alone or two or more thereof may be used in combination.

The thermosetting resin composition of the present invention can be produced by a method typically employed in the technical field, for example, by kneading the materials with a tool such as a planetary mill or kneader.

The cured product of the present invention can be obtained by thermally curing the thermosetting resin composition of the present invention. The molded article of the present invention can be obtained by molding the thermosetting resin composition of the present invention. The methods for molding and thermally curing are not limited and may each be a method typically used in the technical field, such as compression molding, transfer molding, and injection molding.

### EXAMPLES

The present invention is more specifically described hereinbelow with reference to examples which do not intend to limit the present invention.

Following are the materials used in the below examples and comparative examples.

### Unsaturated polyester resin

Unsaturated polyester resin: U-Pica 8552 available from Japan U-pica. Co., Ltd.

### Initiator

Initiator 1; Perbutyl E (tert-butyl peroxy-2-ethylhexyl-monocarbonate; one-minute half-life temperature 161.4°C, molecular weight 246.35, percentage of hydrogen abstraction 49%, available from NOF Corporation)
Initiator 2; Perhexyl Z (tert-hexyl peroxybenzoate; one-minute half-life temperature 160.3°C, molecular weight 222.3, percentage of hydrogen abstraction 27%, available from NOF Corporation)
Initiator 3; Perhexa HC (1,1-di(tert-hexylperoxy)cyclohexane; one-minute half-life temperature 149.2°C, molecular weight 316.47, percentage of hydrogen abstraction 10%, available from NOF Corporation)
Initiator 4; Perbutyl Z (tert-butyl peroxy benzoate; one-minute half-life temperature 166.8°C, molecular weight 194.2, percentage of hydrogen abstraction 56%, available from NOF Corporation)
Initiator 5; Perbutyl C (tert-butyl cumyl peroxide; one-minute half-life temperature 173.3°C, molecular weight 208.3, percentage of hydrogen abstraction 65%, available from NOF Corporation)
Initiator 6; Percumyl D (dicumyl peroxide; one-minute half-life temperature 175.2°C, molecular weight 270.38, percentage of hydrogen abstraction 60%, available from NOF Corporation)
Initiator 7; Perhexa V (n-butyl-4,4-bis(tert-butyl peroxy)valerate; one-minute half-life temperature 172.5°C, molecular weight 334.46, percentage of hydrogen abstraction 45%, available from NOF Corporation)

### Crosslinking agent

Diallyl 2-cyclohexanedicarboxylate: compound 1 obtained in Synthesis Example 1
Diallyl phthalate monomer: available from Osaka Soda Co., Ltd.

### Synthesis Example 1: synthesis of diallyl 1,2-cyclohexanedicarboxylate (crosslinking agent)

A 500-mL flask was charged with 170.5 g (2.93 mol) of allyl alcohol, 150.1 g (1.63 mol) of toluene, 241.1 g (1.40 mol) of 1,2-cyclohexane dicarboxylic acid, and 7.18 g (0.022 mol) of dodecyl benzene sulfonic acid. The materials were stirred with a magnetic stirrer and refluxed in an oil bath. The heating was terminated 20 hours later, and the flask was cooled. The reaction liquid was neutralized and washed with water. The low-boiling point component was evaporated with a rotary evaporator, and the resulting condensed liquid was distilled under reduced pressure, whereby the target diallyl 1,2-cyclohexanedicarboxylate was obtained in an amount of 110.6 g. The obtained compound 1 was used for examples.

Tables 1 and 2 show the compositions of the materials of the thermosetting resin compositions used in the examples and comparative examples. The values for the compositions in the tables are represented by parts by weight.

**[Table 1]**

| | Example | Comparative Example | Example | Comparative Example | Example | Comparative Example | Example | Comparative Example |
|---|---|---|---|---|---|---|---|---|
| | 1 | 1 | 2 | 2 | 3 | 3 | 4 | 4 |
| **Resin** | | | | | | | | |
| Unsaturated polyester resin | 50 | 50 | 50 | 50 | 50 | 50 | 50 | 50 |
| **Crosslinking agent** | | | | | | | | |
| Compound 1 | 50 | | 50 | | 50 | | 50 | |
| Diallyl phthalate monomer | | 50 | | 50 | | 50 | | 50 |
| **Initiator** | | | | | | | | |
| Initiator 1 (Perbutyl E) | 1 | 1 | | | | | | |
| initiator 2 (Perhexyl Z) | | | 1 | 1 | | | | |
| Initiator 3 (Perhexa HC) | | | | | 1 | 1 | | |
| Initiator 4 (Perbutyl Z) | | | | | | | 1 | 1 |

**[Table 2]**

| | Example | Comparative Example | Example | Comparative Example | Example | Comparative Example | Example | Comparative Example |
|---|---|---|---|---|---|---|---|---|
| | 5 | 5 | 6 | 6 | 7 | 7 | 8 | 8 |
| Unsaturated polyester resin | 50 | 50 | 50 | 50 | 50 | 50 | 50 | 60 |
| **Crosslinking agent** | | | | | | | | |
| Compound 1 | 50 | | 50 | | 50 | | 50 | |
| Diallyl phthalate monomer | | 50 | | 50 | | 50 | | 50 |
| **Initiator** | | | | | | | | |
| Initiator 4 (Perbutyl Z) | 1 | 1 | | | | | | |
| Initiator 5 (Perbutyl C) | | | 1 | 1 | | | | |
| Initiator 6 (Percumyl D) | | | | | 1 | 1 | | |
| Initiator 7 (Perhexa V) | | | | | | | 1 | 1 |

### Preparation of thermosetting resin composition

The unsaturated polyester resin and the crosslinking agent were weighed according to the composition shown in Table 1 or 2 such that the total weight of the unsaturated polyester resin and the crosslinking agent was 50 g, and the materials were kneaded with a planetary mill (Mazerustar KK250S available from Kurabo Industries Ltd.) for five minutes. The mixture was stirred with the planetary mill under heating it to 80°C to 90°C until the unsaturated polyester resin was dissolved in the crosslinking agent. The heating and stirring were terminated when the unsaturated polyester resin was dissolved in the crosslinking agent and thereby a uniform product was obtained. The uniform product was cooled to room temperature and then mixed with an initiator in an amount shown in Table 1 or 2. The mixture was stirred with the planetary mill while controlling the temperature thereof to not higher than 30°C, whereby the thermosetting resin composition was prepared.

### High-temperature curing characteristics test

The thermosetting resin composition was poured into a test tube (model: P-18SM, available from Nichiden-rika glass Co., Ltd.) having a size of 18 mm (outer diameter) × 165 mm (height) to the height of the composition of 7.5 cm from the bottom, and a K-type thermoelectric couple was placed at the center (3.75 cm from the bottom) of the height of the poured resin. The test tube was held at the height where the liquid surface of the poured thermosetting resin composition in Table 1 or 2 was 1 cm below the liquid surface of the oil bath, and the time period (curing time) that the temperature of the resin reached the highest attainment temperature from 80°C and the highest attainment temperature were measured. The high-temperature curing characteristics test was performed in conformity with JIS K6901.

The measurement results are shown in Tables 3 and 4. (Results of Table 3: The reaction was performed at a curing temperature of 130°C in Examples 1 to 4 and Comparative Examples 1 to 4. Results of Table 4: The reaction was performed at a curing temperature of 160°C in Examples 5 to 8 and Comparative Examples 5 to 8.)

**[Table 3]**

| | Example | Comparative Example | Example | Comparative Example | Example | Comparative Example | Example | Comparative Example |
|---|---|---|---|---|---|---|---|---|
| | 1 | 1 | 2 | 2 | 3 | 3 | 4 | 4 |
| Curing time (mn) | 2.9 | 2.7 | 2.6 | 2.5 | 1.5 | 1.3 | 3.5 | 3.2 |
| Highest temperature (°C) | 253 | 268 | 256 | 271 | 238 | 254 | 257 | 276 |

**[Table 4]**

| | Example | Comparative Example | Example | Comparative Example | Example | Comparative Example | Example | Comparative Example |
|---|---|---|---|---|---|---|---|---|
| | 5 | 5 | 6 | 6 | 7 | 7 | 8 | 8 |
| Curing time (mn) | 1.5 | 1.3 | 2.2 | 2.1 | 1.9 | 1.6 | 1.6 | 1.6 |
| Highest temperature (°C) | 257 | 275 | 269 | 283 | 267 | 275 | 262 | 279 |

As shown in Tables 3 and 4, the examples using an alicyclic polyfunctional allyl ester as a crosslinking agent showed similar values for the highest attainment temperature and curing time to those of the comparative examples using a diallyl phthalate monomer as a crosslinking agent. These results suggest that combination use of an alicyclic polyfunctional allyl ester as a crosslinking agent and a specific initiator enables curability (especially, curability at low temperature) as good as that in the case using a diallyl phthalate.

Use of a peroxide having a large percentage of hydrogen abstraction stabilizes resonance when allyl radicals are abstracted. This obstructs the polymerization and thus extends the curing time. Perhexyl-based initiators and peroxyketal-based initiators have a low percentage of hydrogen abstraction. In particular, 1,1-di(tert-hexylperoxy)cyclohexane (Perhexa HC), having quite a low percentage of hydrogen abstraction, is easily added to a double bond, which presumably shortens the curing time.

### INDUSTRIAL APPLICABILITY

The thermosetting resin composition of the present invention relates to a thermosetting resin composition that has very good fluidity without substantially losing electric characteristics and mechanical characteristics. The thermosetting resin composition of the present invention has good fluidity and thus can be used for electric/electronic components such as small and thin coil bobbins, controller cases, tag blocks, connecters, and magnetic switching.

## Claims

1. A thermosetting resin composition comprising:
an unsaturated polyester resin;
an alicyclic polyfunctional allyl ester represented by the following formula (1):
[Chem. 1]
**Z(̵COOCH₂ CH=CH₂)ₙ ···** **(1)**
wherein n is an integer of 2 to 4 and Z is an n-valent alicyclic hydrocarbon group; and
an initiator having a one-minute half-life temperature in a range of 100°C to 250°C and a molecular weight of 100 to 400 and selected from the group consisting of peroxyketals, peroxyesters, dialkyl peroxides, and peroxy carbonates.

2. A cured product obtainable by thermally curing the thermosetting resin composition according to claim 1.

3. A molded article obtainable by molding the thermosetting resin composition according to claim 1.
